# EUROPEAN PATENT APPLICATION

(11) **EP 2 600 438 A1**
(43) Date of publication of application: **05.06.2013**
(21) Application number: 12152667.7
(22) Date of filing: 26.01.2012
(51) Int. Cl.: H01M 2/10, H01M 2/20

(54) **Battery module and bracket assembly thereof for positioning batteries**

(30) Priority: 02.12.2011 CN 201110395166; 02.12.2011 CN 201110395169; 02.12.2011 CN 201110395165
(71) Applicant: Suzhou Golden Crown New Energy Co., Ltd., Suzhou City, Jiangsu (CN); Golden Crown New Energy (HK) Limited, Kowloon, Hong Kong (CN)
(72) Inventor: Huang, Jen-Chin, Suzhou City Jiangsu (CN); Song, Huabin, Suzhou City Jiangsu (CN)
(74) Representative: O'Callaghan, Robert James

(57) **Abstract**

A battery module (100, 200) includes a top bracket (11, 31), a bottom bracket (12, 32), a number of batteries clamped by the top and bottom brackets, and an insulative cover (14) fixed to a top side of the top bracket. The top bracket includes a number of top recesses and a number of top separators separating the top recesses from each other. The bottom bracket includes a number of bottom recesses and a number of bottom separators separating the bottom recesses from each other. The top recesses and the bottom recesses are aligned with each other for fixing top sides and bottom sides of the batteries, respectively. The batteries are separated from each other by the top separators and the bottom separators.

## Description

The present invention generally relates to a battery module and a bracket assembly thereof for positioning batteries, and more particularly, to a battery module with improved conductive member for electrically linking the batteries, and a bracket assembly with top and bottom brackets for stably clamping the batteries.

Nowadays, the environment pollution becomes more and more serious. Storage batteries, because of their charging and discharging capabilities, are widely used as power sources to replace the conventional fossil fuels for solving the environment pollution. In the field of vehicle powers, comparing with the conventional power sources, electrical power sources have obvious advantages for environment protection. Battery is one kind of perfect electrical power sources because of no gasoline consumption, no exhaust gas, low noise and small radiation. Presently, ordinary electrical power sources are combined by putting multiple batteries into a battery pack case.

Although batteries can find many applications in a wide spectrum of fields, the batteries used in electrical vehicles need to meet most strict requirements so as to adapt for shaking and bumping circumstances. However, for conventional battery packs, when the batteries are installed in the battery pack case, poles of the batteries lack of protection and are exposed to the exterior, which may easily cause the poles short circuit under environment changes. Besides, the poles of the batteries in the same battery pack are point-to-point connected by conductive lines. However, such connection is not suitable for linking large amount of batteries because, on one hand, such connection lacks of efficiency, and on the other hand, the large amount of batteries generates high current in charging and discharging, and the conductive lines are usually not able to carry such high current and may be fused.

Therefore, an improved battery module and a bracket assembly thereof for positioning batteries are desired.

The present invention provides a battery module including a bracket assembly, a plurality of batteries organized by the bracket assembly and a conductive member electrically linking the batteries in parallel connection and/or in series connection. The bracket assembly includes a top bracket, a bottom bracket, and an insulative cover fixed to a top side of the top bracket for preventing the batteries from being short-circuited. The top bracket includes a plurality of top recesses and a plurality of top separators separating the top recesses from each other. The bottom bracket includes a plurality of bottom recesses and a plurality of bottom separators separating the bottom recesses from each other. The top recesses and the bottom recesses are aligned with each other for fixing top sides and bottom sides of the batteries, respectively, so that the batteries can be clamped by the top bracket and the bottom bracket. The batteries are separated from each other by the top separators and the bottom separators.

The foregoing has outlined rather broadly the features and technical advantages of the present invention in order that the detailed description of the invention that follows may be better understood. Additional features and advantages of the invention will be described hereinafter which form the subject of the claims of the invention.

One aspect of the present invention provides a bracket assembly for positioning batteries each having a positive pole and a negative pole. The bracket assembly includes a top bracket defining a plurality of openings for being extended through by the positive and/or the negative poles of the batteries, a bottom bracket associated with the top bracket for receiving the batteries between the top and bottom brackets along a vertical direction, and an insulative cover disposed on the top bracket and covering the plurality of openings for protecting the batteries.

In one embodiment, the top bracket includes a plurality of top recesses and a plurality of top separators separating the top recesses from each other, and the bottom bracket includes a plurality of bottom recesses and a plurality of bottom separators separating the bottom recesses from each other, where the top recesses and the bottom recesses are aligned with each other for clamping the batteries along the vertical direction. In one embodiment, the bracket assembly further includes glass cement or double-face adhesive tapes disposed in the top recesses and/or the bottom recesses for fixing the batteries. In another embodiment, the bottom bracket includes a bottom wall restricting the bottom recesses, and the bottom wall is integral without any opening to expose the bottom recesses. In yet another embodiment, the top bracket includes a top wall restricting the top recesses, and the plurality of openings defined in the top wall, where the insulative cover is assembled to the top wall of the top bracket for shielding the poles of the batteries.

In one embodiment, the insulative cover includes a top plate and a plurality of side walls extending downwardly from outer edges of the top plate, and at least one of the side walls defines at least one notch therein. In another embodiment, the insulative cover covers on a top side of the top bracket, wherein the insulative cover and the top bracket together define at least one passageway in at least one peripheral side thereof perpendicular to the top side.

In one embodiment, the top bracket and the bottom bracket include a plurality of horizontal top flanges and bottom flanges, respectively, where at least one of the top flanges defines at least one top positioning cutout, and at least one of the bottom flange defines at least one bottom positioning cutout in alignment with the at least one top positioning cutout along the vertical direction.

In another aspect, a battery module includes a bracket assembly and a plurality of batteries clamped by the top bracket and the bottom bracket along a vertical direction. The bracket assembly includes a top bracket, a bottom bracket opposite to the top bracket, and an insulative cover fixed to a top side of the top bracket. Each battery includes a pair of positive pole and negative pole, where the positive poles and the negative poles of the batteries extend through the top bracket and are covered by the insulative cover.

In one embodiment, the battery module further includes a unitary conductive member, where the unitary conductive member at least connects one of the positive and negative poles of two batteries and the other of the positive and negative poles of the adjacent two batteries. In another embodiment, the insulative cover and the top bracket together define at least one passageway being extended through by the unitary conductive member.

In one embodiment, each battery further includes a battery shell, positive electrode materials and negative electrode materials disposed in the battery shell, where the positive electrode materials comprises lithium iron phosphate.

In another aspect, a battery module includes a first battery group, a second battery group, and a conductive member. The first battery group includes a first battery comprising a first positive pole and a first negative pole and a second battery comprising a second positive pole and a second negative pole. The second battery group includes a third battery comprising a third positive pole and a third negative pole, and a fourth battery comprising a fourth positive pole and a fourth negative pole. The conductive member includes a first part at least linking the first and the second positive poles in parallel connection, a second part at least linking the third and the fourth negative poles in parallel connection, and a third part linking one of the first and the second positive poles and one of the third and the fourth negative poles in series connection. In one embodiment, the third part can be flat shaped for carrying high current.

In one embodiment, the first positive pole and the third negative pole are linked by the third part of the conductive member, and the conductive member further comprises a fourth part linking the second positive pole and the fourth negative pole in series connection. In another embodiment, the first and second parts are parallel to each other along a longitudinal direction, and the third and fourth parts are parallel to each other along a transverse direction perpendicular to the longitudinal direction, where the third and fourth parts are separated a distance from each other along the longitudinal direction while both bridge the first and second parts.

In one embodiment, the conductive member is formed or cast of one piece. In another embodiment, the conductive member defines a plurality of through holes through which the first positive and negative poles, the second positive and negative poles, the third positive and negative poles, and the fourth positive and negative poles respectively extends.

In one embodiment, at least one of the first, the second and the third parts of the conductive member comprises a buffering section thereof which is extensible and retractable to suit a gap defined between two adjacent batteries. The first, the second and the third parts each can be formed with the buffering sections in arc-shaped.

These and other aspects of the present invention will become apparent from the following description of the preferred embodiment taken in conjunction with the following drawings, although variations and modifications therein may be effected without departing from the spirit and scope of the novel concepts of the disclosure.

The accompanying drawings illustrate one or more embodiments of the invention and together with the written description, serve to explain the principles of the invention. Wherever possible, the same reference numbers are used throughout the drawings to refer to the same or like elements of an embodiment, and wherein:
FIG. 1 is a perspective view of a battery module with a plurality of batteries installed in a bracket assembly in accordance with a first embodiment of the present invention;
FIG. 2 is a perspective view of an insulative cover as shown in FIG. 1;
FIG. 3 is a perspective view of a top bracket in accordance with a second embodiment of the present invention, which mainly illustrates a top side configuration thereof;
FIG. 4 is another perspective view of the top bracket as shown in FIG. 3 taken from another aspect, which mainly illustrates a bottom side configuration thereof;
FIG. 5 is a perspective view of a bottom bracket in accordance with the second embodiment of the present invention;
FIG. 6 is a perspective view of a battery;
FIG. 7 is a perspective view of a first conductive member for linking the batteries;
FIG. 8 is a top view of a second conductive member for linking the batteries; and
FIG. 9 is a perspective view of the battery module showing the first and the second conductive members linking the batteries in according with the second embodiment of the present invention.

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items.

It will be understood that, although the terms first, second, third etc. may be used herein to describe various elements, components, regions, parts and/or sections, these elements, components, regions, parts and/or sections should not be limited by these terms. These terms are only used to distinguish one element, component, region, part or section from another element, component, region, layer or section. Thus, a first element, component, region, part or section discussed below could be termed a second element, component, region, layer or section without departing from the teachings of the present invention.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The exemplary term "lower", can therefore, encompasses both an orientation of "lower" and "upper," depending of the particular orientation of the figure. Similarly, if the device in one of the figures is turned over, elements described as "below" or "beneath" other elements would then be oriented "above" the other elements. The exemplary terms "below" or "beneath" can, therefore, encompass both an orientation of above and below.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

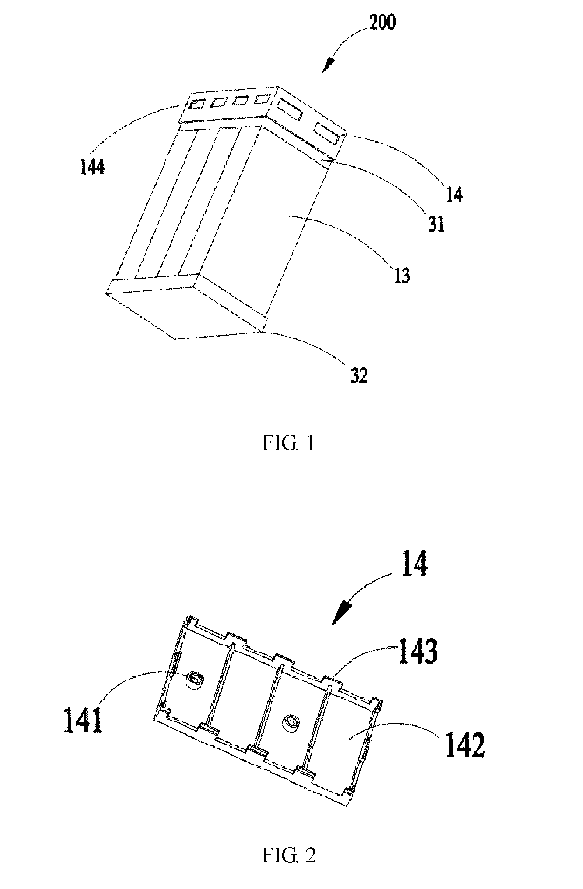

The description will be made as to the embodiments of the present invention in conjunction with the accompanying drawings in FIGS. 1-9. In accordance with the purposes of this invention, as embodied and broadly described herein, this invention, in one aspect, relates to a battery module and a bracket assembly thereof for positioning batteries.

Reference will be made to the drawing figures to describe the present invention in detail, wherein depicted elements are not necessarily shown to scale and wherein like or similar elements are designated by same or similar reference numeral through the several views and same or similar terminology.

FIG. 1 illustrates a battery module 200 in accordance with a first embodiment of the present invention. The battery module 200 includes a bracket assembly, a plurality of batteries clamped by the bracket assembly and a plurality of conductive members electrically and mechanically linking the batteries. The bracket assembly includes a top bracket 31 and a bottom bracket 32 spatially arranged opposite to the top bracket 31 for jointly clamping the batteries 13 along a vertical direction. However, in other embodiments, side brackets (not shown) can be optionally provided and located between the top and bottom brackets 31 and 32 to clamp the batteries along a horizontal direction that is perpendicular to the vertical direction. Referring to FIG. 2, the bracket assembly includes an insulative cover 14 assembled and fixed to the top bracket 31.

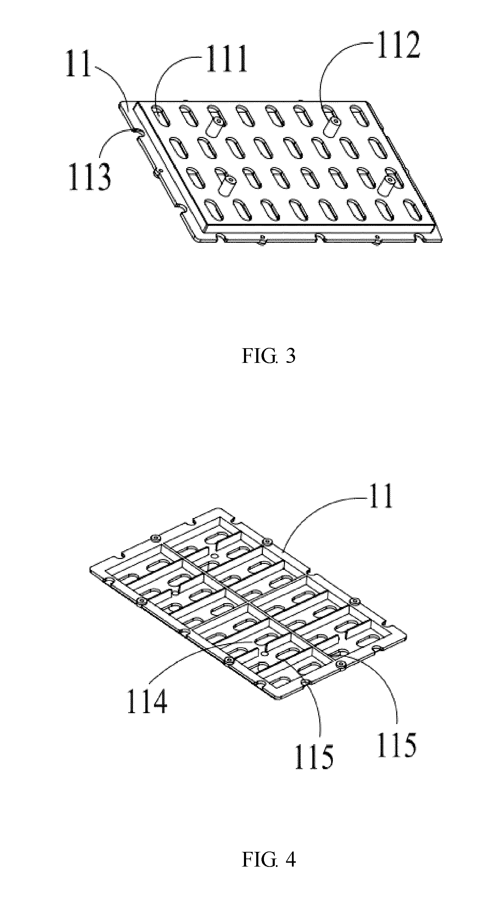

Since the top bracket 31 is used inside a battery module assembly, its material must be provided with good insulating, fireproofing, and high-temperature resistance capabilities. In one embodiment, ABS plastic is used to manufacture the top bracket 31 and make the top bracket 31 with 90 fire rating. FIGS. 3 to 5 show a top bracket 11 and a bottom bracket 12 in accordance with a second embodiment of the present invention, which employ a similar or substantially the same fixing structure for clamping the batteries as that of the top and bottom brackets 31 and 32 in the first embodiments. Therefore, the description of the top and bottom brackets 31 and 32 in the first embodiments is incorporated herewith for the top and bottom brackets 11 and 12 of the second embodiment. The top bracket 11 includes a plurality of top recesses 114, a plurality of perpendicular top separators 115 separating the top recesses 114 from each other, a top wall (not labeled) located above and upwardly restricting the top recesses 114, and a plurality of mounting posts 112 protruding upwardly from the top wall. The top wall defines a plurality of openings 111 for poles/posts of the batteries upwardly extending therethrough. In addition, the top bracket 11 further includes a plurality of peripheral top flanges parallel to the top wall, and each top flange defines a plurality of cutouts 113 for engaging with positioning ribs (not shown) vertically arranged inside of a battery pack case (not shown).

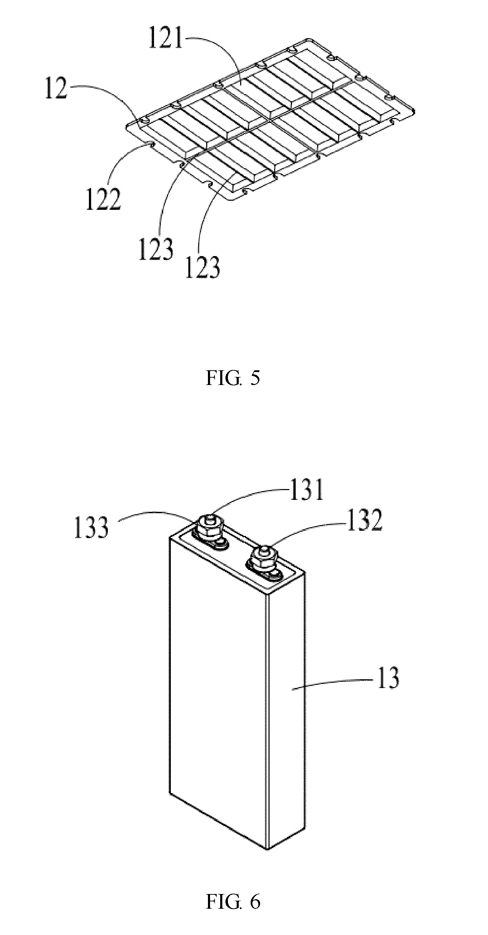

Referring to FIG. 5, the bottom bracket 12 includes a plurality of bottom recesses 121, a plurality of perpendicular bottom separators 123 separating the bottom recesses 121 from each other, a bottom wall (not labeled) located below and downwardly restricting the bottom recesses 121, and a plurality of peripheral bottom flanges parallel to the bottom wall. Each bottom recess 121 is aligned with the corresponding top recess 114 along the vertical direction for cooperatively positioning the batteries. The bottom wall is integral formed without any openings to expose the bottom recesses 121. In other words, the bottom wall is closed for preventing the adjacent batteries from electrically connecting with each other via the bottom wall in case there exist openings.

According to one embodiment of the present invention, the batteries are separated from each other by gaps defined by the top and bottom separators 115 and 123. It is known that in operation, the batteries generate a lot of heats in charging and discharging and work at a very high temperature which causes the batteries to expand. If the batteries are arranged compactly side by side with each other, the adjacent batteries may abut against each other and the generated heat may result in damage of the batteries. However, with the batteries separated from each other by the gaps in accordance with the exemplary embodiment of the present invention, the gaps can help dissipating the heat and reducing the working temperatures, and allow the batteries to expand to some extent for avoidance of damaging the batteries. As a result, working life-span of each battery can be prolonged.

As shown in FIGS. 4 and 5, the top and bottom recesses 114 and 121 are formed in a rectangular shape in this embodiment. However, the top and bottom recesses 114 and 121 can be designed with other shapes configured to receive the batteries. Besides, in order to fasten the batteries more stably, adhesive members, such as glass cement or double-face adhesive tapes, can be disposed in the top recesses 114 and/or the bottom recesses 121. The double-face adhesive tapes may be provided with a reasonable thickness for affixing the batteries.

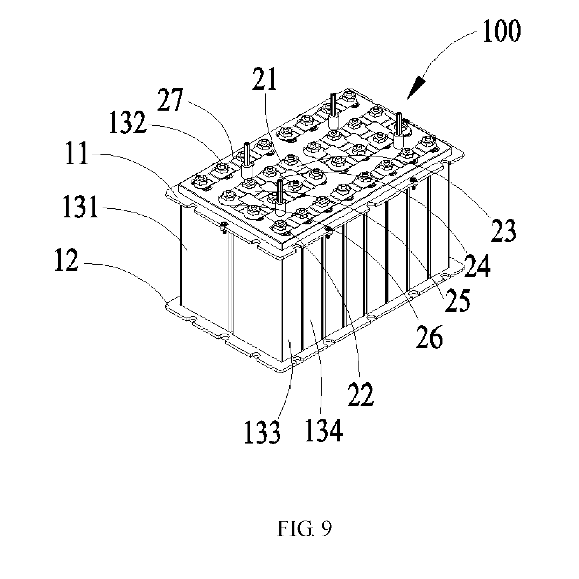

FIG. 9 shows a battery module 100 in accordance with a second embodiment of present invention. After the batteries are assembled together with the top and bottom brackets 11 and 12 to form the battery module 100, the battery module 100 is to be installed in the battery pack case. In order to stably and easily fix the battery module 100 in the battery pack case, each bottom flange defines a plurality of cutouts 122 spatially separated from each other, and the corresponding cutouts 113 and 122 are aligned with each other along the vertical direction. The aligned cutouts 113 and 122 are adapted to receive positioning ribs formed on inner sides of the battery pack case when the battery module 100 is installed in the battery pack case. Under the guiding of cutouts 113 and 122 and the positioning ribs, the battery module 100 can be easily installed in the battery pack case with precise positioning. As a result, the battery module 100 can not easily become loose and disengage with the battery fame even if the battery module 100 shakes or bumps in actual working circumstances.

Referring to FIG. 2 with reference to FIG. 1, the insulative cover 14 includes a top plate and a plurality of side walls extending downwardly from outer edges of the top plate. The top plate includes a plurality of screw holes 141 in its inner side corresponding to mounting posts, such as the posts in the second embodiment labeled 112 shown in FIG. 3. The top bracket 31 and the insulative cover 14 are assembled together by a plurality of self tapping screws (not shown) through the mounting posts and the screw holes 141. Each side wall defines a plurality of notches and forms a plurality of passageways 144 between the top bracket 31 and the insulative cover 14 for allowing conductive members 20 and 27 to be extended therethrough. The conductive members 20 and 27 will be described in details hereinafter. The passageways 144 are adapted for being extending through by conducting members for linking the batteries. Since the insulative cover 14 shields the poles/posts of the batteries at the top, the batteries can be prevented from shorting circuit and breaking, which will be detailedly described hereinafter.

Referring to FIGS. 6 and 9, each battery includes a battery shell 13 with a lid (not labeled) at a top thereof, and a pair of positive and negative poles 131 and 132 respectively electrically connecting positive electrode and negative electrode inside of the battery shell 13 extending upwardly through the lid to be protected by the insulative cover 14. Positive electrode materials and negative electrode materials are set in the battery shell 13. In this embodiment, the positive electrode materials may employ Lithium iron phosphate, such as LiFeP04.

The battery module 100 in accordance with the illustrated embodiment of the present invention can be assembled with the following steps: (1) mounting the battery shells 13 to the corresponding bottom recesses 121 of the bottom bracket 12, and using adhesive members for fixation; (2) mounting the top bracket 11 to the top of the battery shells 13 and using adhesive members for fixation as well; (3) linking the batteries via a parallel connection and/or series connection; and (4) assembling the insulative cover 14 onto the top bracket 11 for protecting the poles/posts of the batteries, and combining the insulative cover 14 and the top bracket 11 by the self tapping screws.

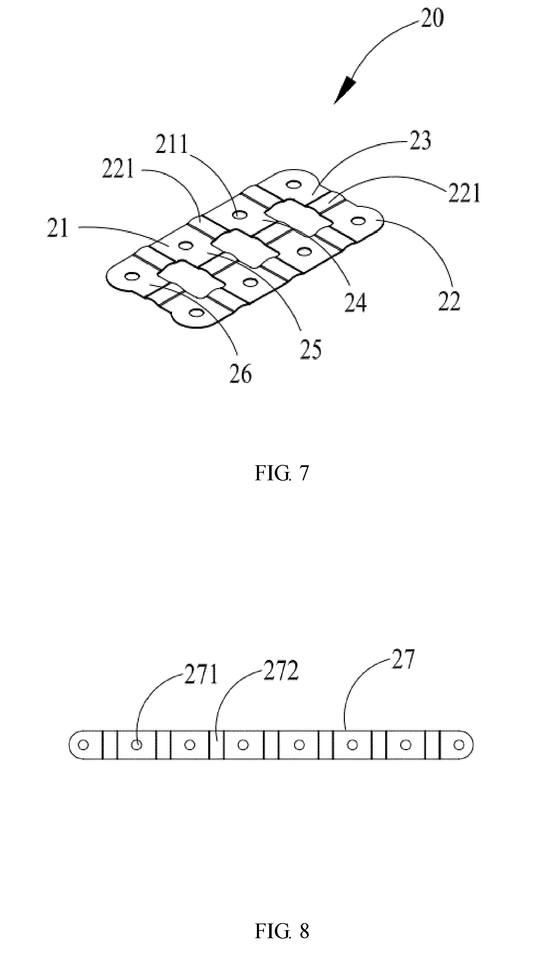

Referring to FIGS. 7 to 9, the batteries are grouped into a plurality of battery groups. Take two battery groups including four batteries as an example for the purpose of illustration. The two battery groups include a first battery group including a first battery 131 and a second battery 132, and a second battery group including a third battery 133 and a fourth battery 134. The first, the second, the third and the fourth batteries are arranged in a matrix, where the first battery 131 and the second battery 132 are aligned in a front-to-back direction, the third battery 133 and the fourth battery 134 are aligned in another parallel front-to-back direction, the first battery 131 and the third battery 133 are aligned in a left-to-right direction perpendicular to the front-to-back direction, and the second battery 132 and the fourth battery 134 are aligned in another parallel left-to-right direction. The first battery 131 includes a first positive pole and a first negative pole. The second battery 132 includes a second positive pole and a second negative pole. The third battery 133 includes a third positive pole and a third negative pole. The fourth battery 134 includes a fourth positive pole and a fourth negative pole. The positive poles and the negative poles of the batteries are electrically and mechanically linked with each other by a first conductive member 20 and a second conductive member 27, as shown in FIG. 9.

Referring further to FIG. 9, the first conductive member 20 includes a first part 21 at least linking the first and the second positive poles in parallel connection, a second part 22 at least linking the third and the fourth negative poles in parallel connection, and a third part 26 linking the first positive pole and the third negative pole in series connection. The third part 26 is flat shaped for carrying high electric current. In the illustrated embodiment of the present invention, the first conductive member 20 and the second conductive member 27 are mounted onto the top side of the top bracket 11 for linking different poles of the batteries so that the batteries can be linked in parallel connection and/or in series connection.

As shown in FIGS. 7 and 9, the first positive pole and the third negative pole are linked by the third part 26 of the first conductive member 20. The first conductive member 20 further includes a fourth part 25 linking the second positive pole and the fourth negative pole in series connection. The first and second parts 21 and 22 are parallel to each other along a longitudinal direction. The third and fourth parts 26 and 25 are parallel to each other along a transverse direction perpendicular to the longitudinal direction. The third and fourth parts 26 and 25 are separated a distance from each other along the longitudinal direction while both bridge the first and second parts 21 and 22.

The first conductive member 20 is made of conductive metals, such as brass or red copper, and is formed or cast of one piece for carrying high current and dissipating heat. In the illustrated embodiment, the first conductive member 20 is unitary and stamped to be flat shaped for better heat dissipating and better high current carrying.

Referring to FIG. 8, the second conductive member 27 extends along the longitudinal direction and includes a plurality of through holes 271 and a plurality of buffering sections 272 between each adjacent through holes 271. In the exemplary embodiment illustrated in FIG. 8, the second conductive member 27 is unitary and stamped to be flat shaped as well. The second conductive member 27 is adapted for at least electrically and mechanically linking the third positive pole and the fourth positive pole in series connection.

According to different numbers of the batteries and the battery dimension of each battery, the first conductive member 20 and the second conductive member 27 can be designed with suitable changes. For example, when the number of the batteries is added, the length of the first part 21 and the second part 22 along the longitudinal direction can be prolonged so as to be suitable for linking the batteries in parallel connection. When the distance between each adjacent two batteries along the transverse direction is widened, the length of the third part 26 and the fourth part 25 can also be prolonged so as to be suitable for linking the batteries in series connection. As shown in FIG. 7, the first conductive member 20 further includes a fifth part 24 and a sixth part 23 both bridging the first and second parts 21 and 22. The fifth and sixth parts 24 and 23 are parallel to the third and fourth parts 26 and 25. The fifth and sixth parts 24 and 23 can be adapted for improving high-current endurance capabilities.

Each of the first and second parts 21 and 22 defines a plurality of through holes 211 for the positive poles and the negative poles of the batteries extending through, and a plurality of buffering sections 221 between each adjacent two through holes 211 along the longitudinal direction. Besides, each of the third, fourth, fifth and sixth parts 26, 25, 24 and 23 includes a buffering section 221 at its middle portion thereof. As shown in FIGS. 6 and 9, after the positive poles and the negative poles of the batteries are mounted through the through holes 211 of The first and second parts 21 and 22 and the through holes 271 of the second conductive member 27, a plurality of nuts 133 are mounted to the positive poles and the negative poles for fixing the first and second conductive members 20 and 27 to the batteries.

The buffering sections 221 and 272 are extensible and retractable in order to suit the corresponding gaps between the first, the second, the third and the fourth batteries even if the batteries expand due to occurring high temperatures on working. In the illustrated embodiment of the present invention, each of the buffering sections 221 and 272 is arced to be extensible and retractable.

With the unitary first conductive member 20 for linking the batteries in parallel connection and/or in series connection, the first conductive member 20 can be provided with better capabilities for carrying high current. Further, the unitary first conductive member 20 and the unitary second conductive member 27 can greatly improve the efficiency when linking the batteries, comparing with a traditional point-to-point connection means.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to activate others skilled in the art to utilize the invention and various embodiments and with various modifications as are suited to the particular use contemplated. Alternative embodiments will become apparent to those skilled in the art to which the present invention pertains without departing from its spirit and scope. Accordingly, the scope of the present invention is defined by the appended claims rather than the foregoing description and the exemplary embodiments described therein.

It is to be understood, however, that even though numerous, characteristics and advantages of the present invention have been set forth in the foregoing description, together with details of the structure and function of the invention, the disclosed is illustrative only, and changes may be made in detail, especially in matters of number, shape, size, and arrangement of parts within the principles of the invention to the full extent indicated by the broadest general meaning of the terms in which the appended claims are expressed.

## Claims

1. A bracket assembly for positioning batteries, each battery having a positive pole and a negative pole, the bracket assembly comprising:
a top bracket (11, 31) defining a plurality of openings for being extended through by the positive and/or negative poles of the batteries;
a bottom bracket (12, 32) associated with the top bracket for receiving the batteries between the top and bottom brackets along a vertical direction; and
an insulative cover (14) disposed on the top bracket and covering the plurality of openings for protecting the batteries.

2. The bracket assembly as claimed in claim 1, wherein the top bracket comprises a plurality of top recesses and a plurality of top separators separating the top recesses from each other; and the bottom bracket comprises a plurality of bottom recesses and a plurality of bottom separators separating the bottom recesses from each other; the top recesses and the bottom recesses being aligned with each other for clamping the batteries along the vertical direction,
the assembly preferably further comprising glass cement or double-face adhesive tapes disposed in the top recesses and/or the bottom recesses for fixing the batteries.

3. The bracket assembly as claimed in claim 2, wherein the bottom bracket comprises a bottom wall restricting the bottom recesses, wherein the bottom wall is integral without opening to expose the bottom recesses.

4. The bracket assembly as claimed in claim 2 or claim 3, wherein the top bracket comprises a top wall restricting the top recesses, and the plurality of openings defined in the top wall, wherein the insulative cover is assembled to the top wall of the top bracket for shielding the poles of the batteries.

5. The bracket assembly as claimed in any of claims 1 to 4, wherein the insulative cover comprises a top plate and a plurality of side walls extending downwardly from outer edges of the top plate, and at least one of the side walls defines at least one notch therein.

6. The bracket assembly as claimed in any of claims 1 to 5, wherein the insulative cover covers on a top side of the top bracket, and wherein the insulative cover and the top bracket together define at least one passageway in at least one peripheral side thereof perpendicular to the top side.

7. The bracket assembly as claimed in any of claims 1 to 6, wherein the top bracket and the bottom bracket comprise a plurality of horizontal top flanges and bottom flanges, respectively, wherein at least one of the top flanges defines at least one top positioning cutout, and at least one of the bottom flange defines at least one bottom positioning cutout in alignment with the at least one top positioning cutout along the vertical direction.

8. A battery module (100, 200), comprising:
a bracket assembly according to any of claims 1 to 7; and
a plurality of batteries clamped by the top bracket and the bottom bracket of the bracket assembly along a vertical direction, each battery comprising a pair of positive pole and negative pole,
wherein the positive poles and the negative poles of the batteries extend through the top bracket and are covered by the insulative cover.

9. A battery module according to claim 8, wherein the plurality of batteries comprises:
a first battery group comprising:
a first battery comprising a first positive pole and a first negative pole; and
a second battery comprising a second positive pole and a second negative pole; and
a second battery group comprising:
a third battery comprising a third positive pole and a third negative pole; and
a fourth battery comprising a fourth positive pole and a fourth negative pole; and
the battery module further comprises a conductive member comprising a first part at least linking the first and second positive poles in parallel connection, a second part at least linking the third and fourth negative poles in parallel connection, and a third part linking one of the first and second positive poles and one of the third and fourth negative poles in series connection,
the third part preferably being flat shaped for carrying high current.

10. The battery module as claimed in claim 9, wherein the first positive pole and the third negative pole are linked by the third part of the conductive member, and the conductive member further comprises a fourth part linking the second positive pole and the fourth negative pole in series connection.

11. The battery module as claimed in claim 10, wherein the first and second parts are parallel to each other along a longitudinal direction, and the third and fourth parts are parallel to each other along a transverse direction perpendicular to the longitudinal direction; wherein the third and fourth parts are separated a distance from each other along the longitudinal direction while both bridge the first and second parts.

12. The battery module as claimed in any of claims 9 to 11, wherein the insulative cover and the top bracket together define at least one passageway being extended through by the conductive member.

13. The battery module as claimed in any of claims 9 to 12, wherein the conductive member is formed or cast of one piece.

14. The battery module as claimed in any of claims 9 to 13, wherein the conductive member defines a plurality of through holes through which the first positive and negative poles, the second positive and negative poles, the third positive and negative poles, and the fourth positive and negative poles respectively extend.

15. The battery module as claimed in any of claims 9 to 14, wherein at least one of the first, the second and the third parts of the conductive member comprises a buffering section thereof which is extensible and retractable to suit a gap defined between two adjacent batteries,
each of the first, second and third parts preferably being formed with the buffering sections in arc-shapes.
